Europäisches Patentamt

European Patent Office

Office européen des brevets

(11) Veröffentlichungsnummer: **0 505 766 A1**

# EUROPÄISCHE PATENTANMELDUNG

(21) Anmeldenummer: **92103549.9**

(22) Anmeldetag: **02.03.92**

(51) Int. Cl.⁵: **B60S 3/04**

(30) Priorität: **23.03.91 DE 9103576 U**

(43) Veröffentlichungstag der Anmeldung:
**30.09.92 Patentblatt 92/40**

(84) Benannte Vertragsstaaten:
**AT BE CH DE DK ES FR GB GR IT LI LU MC NL PT SE**

(71) Anmelder: **Burger, Horst**
**Gartenstrasse 6d**
**W-8902 Neusäss(DE)**

(72) Erfinder: **Burger, Horst**
**Gartenstrasse 6d**
**W-8902 Neusäss(DE)**

(74) Vertreter: **Sasse, Volker, Dipl.-Ing.**
**Parreutstrasse 27**
**W-8070 Ingolstadt(DE)**

(54) **Vorrichtung für die bürstenlose Fahrzeugwäsche.**

㉗ Bei einer bürstenlosen Fahrzeugwäsche, die von freihängenden Waschstreifen (W) unterstützt wird, sind diese über das Fahrzeug (F) pendelnd geschleppten Waschstreifen (W) an einer Trageinrichtung (1) mit einer Heb- und Senkvorrichtung befestigt. Für den Trocknungsvorgang werden diese Waschstreifen (W) in der Heb- und Senkvorrichtung aufgewickelt und ihre Enden von einem Abschirmelement (A) unterfaßt, damit kein Tropfwasser auf die Fahrzeugoberfläche kommt und die Waschstreifen (W) rechtzeitig aus der Trocknungszone gelangen.

FIG 2

EP 0 505 766 A1

Die Erfindung betrifft eine Vorrichtung der im Oberbegriff des Anspruchs 1 angegebenen Art.

Aufgrund der unvermeidbaren mechanischen Einflüsse der bisher üblichen Bürstenwäsche mit rotierenden Bürsten auf die Fahrzeugoberfläche beginnt sich die bürstenlose Fahrzeugwäsche mehr und mehr durchzusetzen, bei der die mechanische Belastung der Fahrzeugoberfläche vernachlässigbar gering ist. Als aktive Waschelemente werden Waschstreifen verwendet, die frei herabhängen und durch eine aufgebrachte Pendelbewegung und das ihnen innen und außen entlang herabströmende Wasser, gegebenenfalls unter Verwendung von waschaktiven Substanzen, die Fahrzeugoberfläche reinigen. Allerdings haben die Waschstreifen den unangenehmen Effekt des Nachtropfens, weil sie als eine Art Labyrinth die Ablaufbewegung des Wassers verzögern und deshalb noch Wasser abgeben, wenn kein Frischwasser mehr zugeführt wird. Auch beim Anheben der Waschstreifen, was beispielsweise durch Aufwickeln erfolgt, wird das noch in den Waschstreifen enthaltene Wasser herausgedrückt.

In einer stationären Waschvorrichtung, durch die ein Fahrzeug nach dem anderen hindurchfährt, wird beim Nachtropfen der Waschstreifen eine beträchtliche Wassermenge, gegebenenfalls mit Waschhilfesubstanzen, vergeudet, ehe das nächstfolgende Fahrzeug in den Arbeitsbereich der Waschstreifen kommt. Das gilt auch für sogenannte Portalwaschanlagen, bei denen die Vorrichtung relativ zum stillstehenden Fahrzeug verfahren wird. Hier kommt noch der gravierende Nachteil dazu, daß nach Abschluß der Wäsche und beginnendem Druckluft-Trocknungsvorgang, bei dem das Wasser von der Fahrzeugoberfläche abgeblasen wird, das Trocknungsergebnis durch das nachtropfende Wasser der Waschstreifen außerordentlich gestört wird. Denn das Abschälen des Wassers mittels Druckluft wird üblicherweise mit einem Zusatzmittel chemisch unterstützt, dessen Wirkung durch nachtropfendes Klarwasser beeinträchtigt wird.

Der Erfindung liegt die Aufgabe zugrunde, eine Vorrichtung der eingangs genannten Art zu schaffen, bei der ein wirkungsvoller Waschvorgang erfolgt und andererseits eine unnötige Wasservergeudung unterbleibt bzw. die bei Einsatz in einer fahrbaren Portalwaschanlage eine rasche und wirkungsvolle Trocknung der Fahrzeugoberfläche ermöglicht.

Die gestellte Aufgabe wird erfindungsgemäß mit dem im kennzeichnenden Teil des Anspruches 1 enthaltenen Merkmalen gelöst.

Bei dieser Ausbildung werden die Waschstreifen während des Waschvorganges wirkungsvoll eingesetzt und nach Beendigung so aufgenommen, daß nachtropfendes Wasser aus den Waschstreifen nicht mehr auf die Fahrzeugoberfläche gelangen, weil das Abschirmelement eine Trennung zwischen den Waschstreifen und dem Fahrzeug herstellt. Bei einer verfahrbaren Portalwaschanlage wird so der Druckluft-Trocknungsvorgang durch Tropfwasser aus den Waschstreifen nicht gestört, selbst wenn der Trocknungsvorgang schon beginnt, während die Waschstreifen noch in ihrer Hochziehbewegung sind. Das nachtropfende Wasser kann von dem Abschirmelement am Fahrzeug vorbei und zu einer Stelle geleitet werden, wo es sofort wieder in den Waschkreislauf übergeführt wird. Es ist aber auch denkbar, das Abschirmelement gleich als Speicher für das Tropfwasser auszubilden und dieses Tropfwasser beim nächsten Waschvorgang eines neuen Fahrzeugs zweckgebunden einzusetzen.

Es hat sich als vorteilhaft erwiesen, die Hebevorrichtung als auf- und abwickelnde Welle auszubilden. Die Waschstreifen werden in kürzester Zeit aufgenommen oder auf die Fahrzeugoberfläche gebracht. Bei dem Aufwickeln wird das in den Waschstreifen sitzende Wasser selbständig herausgedrückt, so daß im aufgewickelten Zustand höchstens noch ein geringes Nachtropfen möglich ist, das von dem Abschirmelement ausreichend aufgefangen wird.

Eine wesentliche Weiterbildung wird mit den Merkmalen des Anspruchs 3 erreicht. Die die Kontur des Fahrzeugs abtastende Steuervorrichtung kann aus einer Lichtschranke bestehen, die die Waschstreifen beim Waschvorgang jeweils so weit herunterhängen läßt, daß lediglich ihre Enden auf der Fahrzeugoberfläche zu liegen kommen und dann den Schmutz durch ihre Pendelbewegung lösen und abwedeln. Es ist somit gewährleistet, daß auf der Oberfläche des Fahrzeugs - gleichgültig welcher Kontur - immer nur die Endbereiche der Waschstreifen auftreffen.

Eine wichtige Ausführungsform geht aus Anspruch 4 hervor. In der Passivstellung beeinflußt das Abschirmelement das Arbeiten der Waschstreifen nicht. In seine Eingriffsstellung wird das Abschirmelement nur dann gebracht, wenn verhindert werden muß, daß nachtropfendes Wasser noch aus den Waschstreifen auf das Fahrzeug gelangt oder vergeudet wird.

Besonders wichtig ist das Merkmal von Anspruch 5. Das Abschirmelement erhält hier eine Zusatzfunktion, weil es die unteren Endteile der Waschstreifen anhebt, sobald es in der Eingriffsstellung ist. Damit ist es nicht mehr notwendig, die Waschstreifen sehr weit anzuheben, gegebenenfalls um den Trocknungsvorgang oder einen anderen Waschschritt ungestört durchführen zu können, weil das Abschirmelement für das endgültige Anheben der Endteile der Waschstreifen sorgt.

Eine für die Praxis zuverlässige Ausführungsform geht ferner aus Anspruch 6 hervor. Bei dieser Art der Anbringung ist eine rasche Bewegung des Abschirmelementes zwischen seinen beiden Positionen möglich. Der Bewegungsweg kann günstig kurz sein. Es reicht ein schwacher und damit leichter Antrieb aus.

Eine wichtige Alternative geht aus Anspruch 7 hervor. Bei dieser Ausbildung ist das Abschirmelement stationär angeordnet. Die Waschstreifen werden bis über das Abschirmelement bewegt, das dann seine abschirmende Funktion ausführt. Dies kann im Besonderen bei fahrbaren Portalwaschanlagen zweckmäßig sein, wobei dann gegebenenfalls an der unteren Seite des Abschirmelementes die Trocknungsvorrichtung oder zumindest Teile derselben angebracht sein könnten.

Wichtig ist ferner das Merkmal von Anspruch 8, weil bei dieser Ausbildung das Abschirmelement das Verschmutzen der Fahrzeugoberfläche mit Tropfwasser sehr zuverlässig verhindert.

Ein besonders wichtiger Gedanke ist in Anspruch 9 enthalten. Die Auffangschale, die aus Metall oder Kunststoff bestehen kann, speichert das Tropfwasser aus den Waschstreifen bis zum nächsten Waschvorgang. Das Fahrzeug wird nicht durch das Tropfwasser benäßt. Das Tropfwasser wird aber auch nicht vergeudet und braucht auch nicht in den Waschkreislauf gepumpt zu werden, weil es für den nächsten Waschvorgang ohnedies bereitsteht. Günstig ist dabei, daß wenn die unteren, in der Auffangschale liegenden, Endteile der Waschstreifen ständig naß gehalten werden. Damit ist nämlich sichergestellt, daß beim nächsten Waschvorgang sofort wieder die ausreichend genäßten und damit für die Fahrzeugoberfläche schonenden Waschstreifen arbeiten. Liefen nämlich die Waschstreifen vollkommen aus, dann müßten sie erst eine gewisse Zeitspanne mit Wasser versorgt werden, um auch unten wieder ausreichend naß zu sein. Dies wird sozusagen in einem Zug mittels der Auffangschale erreicht.

Eine weitere, zweckmäßige Alternative geht aus Anspruch 10 hervor. Eine starre Platte, die aus Metall oder aus Kunststoff besteht oder aus Plattenteilen zusammenfaltbar oder zusammenlegbar ist, kann das Tropfwasser einfach zur Seite oder hinter oder vor das Fahrzeug ableiten, um es von der Fahrzeugoberfläche fernzuhalten.

Eine weitere, einfache Ausführungsform geht aus Anspruch 11 hervor. Hierbei ist das Abschirmelement aus einem faltbaren oder aufspannbaren Material. Es braucht nicht nur das Tropfwasser zur Seite zu lenken, sondern es kann auch wie ein umgekehrter Regenschirm als Auffangschale für das Tropfwasser benutzt werden. Eine Bahn oder ein Gewebestück kann von der Seite wie ein Rollo durch den Waschdurchgang gezogen werden und dabei auf einfache Weise die Endteile der Waschstreifen unterfangen.

Bei der Ausführungsform gemäß Anspruch 12 verhindert das Abschirmelement, daß nachtropfendes Wasser auf die Fahrzeugoberfläche gelangt, während die benachbarte Trocknungsvorrichtung schon in Betrieb ist und das Wasser von der Fahrzeugoberfläche auftrocknet oder abschält.

Nach der Zeichnung wird eine Ausführungsform des Erfindungsgegenstandes erläutert.

Es zeigen:

Figur 1    eine Vorderansicht einer Vorrichtung zur bürstenlosen Fahrzeugwäsche, in einer bestimmten Betriebsphase und

Figur 2    eine zugehörige Seitenansicht einer anderen Betriebsphase.

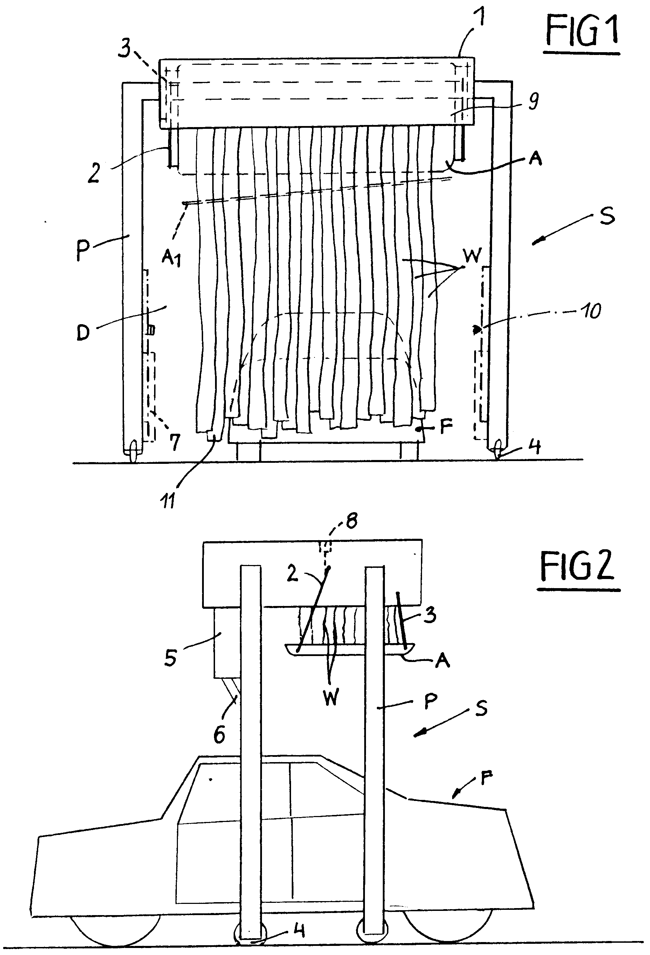

Gemäß den Figuren 1 und 2 ist in einer Waschstation S für die bürstenlose Fahrzeugwäsche oberhalb eines Waschdurchganges D eine Trageinrichtung 1 für eine Vielzahl von Waschstreifen W angeordnet.

In den Figuren 1 und 2 ist die Trageinrichtung 1 in einem Portal P gehalten, das auf Rädern 4 relativ zum stillstehenden Fahrzeug F verfahrbar ist.

Es ist aber auch denkbar, die Trageinrichtung 1 mit den Waschstreifen W in eine durchfahrbare Waschstation S einzugliedern.

In der Trageinrichtung 1 sind die Waschstreifen W aus der in Figur 1 gezeigten Position mit einer Hebevorrichtung 9 nach oben anhebbar, z.B. indem sie mit einer Welle aufgewickelt und damit hochgezogen werden. Die Waschstreifen W werden mit Wasser versorgt, das an ihnen entlang und in ihnen nach unten auf die Fahrzeugoberfläche rieselt. Gegebenenfalls werden Waschzusätze zugesetzt. Während des Waschvorgangs wedeln die Waschstreifen W über die Fahrzeugoberfläche durch die Pendelbewegung der Hebevorrichtung 9 hin und her. Eine die Fahrzeugkontur abtastende Steuervorrichtung 10, die beispielsweise aus einer am Portal P befestigten Lichtschranke besteht, hält die Waschstreifen W während des Waschvorgangs in einer derartigen Höhe, daß deren Enden mit ca. 30 cm auf der Fahrzeugoberfläche entlanggezogen werden.

An der Trageinrichtung 1 ist in Figur 1 ein Abschirmelement A beweglich gehalten, das sich zwischen der in Figur 1 angedeuteten Passivstellung, in der es außerhalb des Arbeitsbereiches der Waschstreifen W liegt, in eine Eingriffsstellung gemäß Figur 2 bewegen läßt, in der es unterhalb der dann hochgezogenen Waschstreifen W liegt und das von diesen herabtropfende Wasser entweder zur Seite oder nach hinten über das Fahrzeug wegleitet oder nach Art einer Auffangschale speichert und daran hindert, auf die darunterliegende Fahrzeugoberfläche oder unkontrolliert auf den Boden zu laufen.

Das Abschirmelement A, das aus Metall oder Kunststoff als Wanne oder Schale ausgebildet sein kann, ist mit Schwenkarmen 2, 3 an der Trageinrichtung 1 oder auch am Portal P beweglich angeordnet. Ein Antrieb 8 sorgt für die entsprechenden Bewegungen des Abschirmelementes A. Am Portal P können seitliche Wascheinrichtungen 7 vorgesehen sein. Ferner kann an der Trageinrichtung 1 vor den Waschstreifen W eine Druckluft-Trocknungseinrichtung 5 mit Trocknungs- oder Abschäldüsen 6 vorgesehen sein. In der Trocknungsstellung gemäß Figur 2 hindert das Abschirmelement A das Herabtropfen des Tropfwassers auf die Fahrzeugoberfläche und damit eine Störung des Trocknungsvorgangs.

Das Abschirmelement könnte auch, wie in Figur 1 strichliert angedeutet, eine schräge gerade Platte oder ein plattenförmiges Element oder eine gespannte Bahn sein, um das Tropfwasser einfach zur Seite am Fahrzeug vorbei zu leiten. Es wäre auch denkbar, eine zusammenfaltbare oder klappbare Platte für diesen Zweck zu öffnen, sobald die Waschstreifen W hochgezogen sind. Denkbar wäre ferner die Verwendung einer Bahn oder eines spannbaren elastischen Gewebes, das wie ein Regenschirm oder ein Rollo unter die hochgezogenen Waschstreifen gezogen wird.

Da das Portal P relativ zum Fahrzeug hin- und hergefahren wird, könnte das Abschirmelement auch stationär so angeordnet sein, daß die hochgezogenen Waschstreifen über dem Abschirmelement liegen bzw. hängen, wenn der Trocknungsvorgang abläuft.

Zweckmäßigerweise werden die unteren Endteile der Waschstreifen W in der Eingriffsstellung des als Schale oder Wanne ausgebildeten Abschirmelementes A gemäß Figur 2 von diesem hochgehoben. Dies ist günstig, weil die Waschstreifen in dem gesammelten Tropfwasser liegen und eingeweicht bleiben, so daß sie für den nächsten Waschvorgang sofort wieder einsatzbereit sind. Die Waschstreifen in den Figuren 1 und 2 sind mittels nicht gezeigter Antriebe in der Trageinrichtung 1 entweder in Längsrichtung oder quer zur Längsrichtung oder in beiden Richtungen zu einer Pendelbewegung anregbar, die den sanften aber trotzdem intensiven Wascheffekt der Waschstreifen sicherstellt.

**Patentansprüche**

1. Vorrichtung für die bürstenlose Fahrzeugwäsche, mit einer oberhalb eines Waschdurchgangs angeordneten Trageinrichtung für frei in den Durchgang hängende Waschstreifen, wobei die Trageinrichtung entweder in eine stationäre und durchfahrbare oder in eine das Fahrzeug überfahrende portalartige Waschstation eingegliedert ist, dadurch gekennzeichnet, daß die Trageinrichtung (1) mit einer Hebevorrichtung (9) zum Anheben und Absenken der Waschstreifen (W) ausgebildet und im Waschdurchgang (D) ein das Fahrzeug (F) gegen Tropfwasser aus den Waschstreifen (W) schützendes Abschirmelement (A, A1) vorgesehen ist.

2. Vorrichtung nach Anspruch 1, dadurch gekennzeichnet, daß die Hebevorrichtung (9) von einer die Waschstreifen (W) auf- und abwickelnden Welle gebildet ist.

3. Vorrichtung nach Anspruch 1 oder 2, dadurch gekennzeichnet, daß die Hebevorrichtung (9) von einer das Fahrzeug (F) abtastenden Steuervorrichtung (10) derart beaufschlagt ist, daß im Waschvorgang die Waschstreifen (10) jeweils gerade noch mit ihren Enden (11) auf der Fahrzeugoberfläche zu liegen kommen.

4. Vorrichtung nach Anspruch 1, dadurch gekennzeichnet, daß das Abschirmelement (A, A1) zwischen einer Passivstellung und einer Eingriffsstellung unterhalb der Waschstreifen (W) beweglich angeordnet ist.

5. Vorrichtung nach Anspruch 1 oder 4, dadurch gekennzeichnet, daß das Abschirmelement (A, A1) in der Eingriffsstellung höher liegt als die unteren Enden der frei herabhängenden, hochgezogenen Waschstreifen (W), und daß mit dem Abschirmelement die unteren Endteile der Waschstreifen (W) anhebbar sind.

6. Vorrichtung nach Anspruch 1, dadurch gekennzeichnet, daß das Abschirmelement (A) an Schwenkarmen (2, 3) an der Trageinrichtung (1) angebracht ist, und daß ein Antrieb (8) zur Bewegung des Abschirmelementes (A) vorgesehen ist.

7. Vorrichtung nach Anspruch 1, dadurch gekennzeichnet, daß das Abschirmelement (A1) stationär angeordnet ist, und daß die hochgezogenen Waschstreifen (W) in eine Stellung oberhalb des Abschirmelements (A1) beweglich sind.

8. Vorrichtung nach mindestens einem der Ansprüche 1, 3 bis 7, dadurch gekennzeichnet, daß das Abschirmelement (A, A1) im wesentlichen wasserundurchlässig ist.

9. Vorrichtung nach mindestens einem der Ansprüche 1, 3 bis 8, dadurch gekennzeichnet, daß das Abschirmelement (A, A1) eine Auffangschale ist.

10. Vorrichtung nach einem der Ansprüche 1, 3 bis 9, dadurch gekennzeichnet, daß das Abschirmelement (A) eine starre Platte ist oder aus zusammenlegbaren oder zusammenfaltbaren Plattenteilen besteht.

11. Vorrichtung nach einem der Ansprüche 1, 3 bis 8, dadurch gekennzeichnet, daß das Abschirmelement eine Bahn, ein Gewebestück od. dgl., aufweist, die bzw. das aufspannbar, ausrollbar, durch den Waschdurchgang durchziehbar ist.

12. Vorrichtung nach mindestens einem der Ansprüche 1 bis 11, dadurch gekennzeichnet, daß benachbart zu den Waschstreifen (W) und dem Abschirmelement eine Druckluft-Trocknungseinrichtung (5) vorgesehen ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 462 133 (HANNA) | 1,4,5,7, 8,11,12 | B60S3/04 |
| Y | * Zusammenfassung; Ansprüche 1-12; Abbildungen * | 2 | |
| Y | * Spalte 1, Zeile 6 - Zeile 31 * | 6,9,10 | |
| A | * Spalte 2, Zeile 37 - Spalte 3, Zeile 32 * | 3 | |
| | * Spalte 3, Zeile 55 - Spalte 7, Zeile 34 * | | |
| | --- | | |
| Y | US-A-4 937 908 (MCCADDEN) | 2 | |
| A | * das ganze Dokument * | 1,3,12 | |
| | --- | | |
| Y | DE-A-3 721 219 (WESUMAT FAHRZEUGWASCHANLAGEN) | 6,9,10 | |
| A | * das ganze Dokument * | 1,8,12 | |
| | --- | | |
| A | US-A-4 726 388 (SWINEHART ET AL) * Zusammenfassung; Ansprüche 1,2; Abbildungen 13-17 * * Spalte 1, Zeile 54 - Spalte 2, Zeile 53 * * Spalte 8, Zeile 55 - Spalte 10, Zeile 29 * | 3 | |
| | ----- | | **RECHERCHIERTE SACHGEBIETE (Int. Cl.5)** B60S |

Der vorliegende Recherchenbericht wurde für alle Patentansprüche erstellt

| Recherchenort | Abschlußdatum der Recherche | Prüfer |
|---|---|---|
| DEN HAAG | 23 JUNI 1992 | WESTLAND P.G. |